# FASCICULE DE BREVET EUROPEEN

(11) **EP 4 063 261 B1**
(45) Date de publication et mention de la délivrance du brevet: **21.06.2023**
(21) Numéro de dépôt: 22156146.7
(22) Date de dépôt: 10.02.2022
(51) Int. Cl.: B64C 11/30, B64C 13/04, B64C 27/56, B64C 27/26

(54) **SYSTEME DE COMMANDE POUR COMMANDER AU MOINS UNE HELICE D'UN GIRAVION HYBRIDE, GIRAVION HYBRIDE ET PROCEDE DE COMMANDE ASSOCIE**
SYSTEM ZUM STEUERN MINDESTENS EINES PROPELLERS EINES HYBRID-DREHFLÜGELFLUGZEUGS, HYBRID-DREHFLÜGELFLUGZEUG UND ENTSPRECHENDES STEUERUNGSVERFAHREN
SYSTEM FOR CONTROLLING AT LEAST ONE PROPELLER OF A HYBRID ROTORCRAFT, HYBRID ROTORCRAFT AND ASSOCIATED CONTROL METHOD

(30) Priorité: 26.03.2021 FR 2103064
(43) Date de publication de la demande: 28.09.2022
(73) Titulaire: Airbus Helicopters, 13725 Marignane Cedex (FR)
(72) Inventeur: ABDELLI, Kamel, 13011 MARSEILLE (FR)
(74) Mandataire: GPI Brevets

(56) Documents cités:
- EP-A1- 2 258 616
- EP-A1- 3 503 149
- WO-A2-2016/043943
- US-A1- 2018 319 482

## Description

La présente invention concerne un système de commande pour commander au moins une hélice d'un giravion hybride ou hélicoptère hybride.

Un tel giravion hybride peut ainsi être équipé d'un tel système de commande et mettre en oeuvre un procédé de commande associé.

Ce type de système de commande permet alors notamment de générer un ordre de commande pour piloter collectivement un pas des pales d'une ou plusieurs hélices.

De manière générale, un giravion tel un hélicoptère peut comporter usuellement un rotor principal, voire un rotor de contrôle du mouvement en lacet.

Pour piloter un hélicoptère, un pilote peut manoeuvrer une première commande et une deuxième commande pour contrôler respectivement collectivement et cycliquement le pas des pales du rotor de sustentation, via une architecture mécanique et/ou électrique par exemple. La première commande est dénommée par commodité « commande de pas collectif » et prend souvent la forme d'un levier dit « levier de pas collectif ». La deuxième commande est dénommée par commodité « commande de pas cyclique » et prend souvent la forme d'un manche dit « manche cyclique ».

Un autre type de giravion est dénommé « giravion hybride » par commodité en raison de sa spécificité, par ailleurs l'expression correspondante pour ce type d'aéronef est connue en langue anglaise sous l'appellation de « compound rotorcraft ». Un giravion hybride comporte une cellule portant au moins une voilure tournante munie d'un rotor, ce rotor étant dénommé « rotor de sustentation » par la suite par commodité et en raison d'au moins une de ses fonctions. Le rotor de sustentation participe au moins à la sustentation de l'aéronef voire à son avancement.

Un giravion hybride comprend de plus au moins une hélice, possiblement de type hélice tractive ou propulsive. Par exemple, le giravion hybride peut être pourvu d'au moins deux hélices agencées transversalement de part et d'autre du fuselage. Chaque hélice est portée par un support pouvant prendre la forme d'une aile.

Par ailleurs, un giravion hybride comporte une installation motrice pour mettre en mouvement chaque hélice et/ou le rotor de sustentation, éventuellement en permanence hors cas de panne ou d'essais.

En plus de la première commande et de la deuxième commande évoquées précédemment, un tel giravion hybride est muni de commandes pour piloter la ou les hélices.

Notamment sur un giravion hybride à au moins deux hélices situées de part et d'autre du fuselage, le pas des pales de chaque hélice est fonction d'une composante de pas moyen et d'une composante de pas différentiel. Ainsi, le premier pas des premières pales d'une première hélice peut être égal à la somme de la composante de pas moyen et de la composante de pas différentiel alors que le deuxième pas des deuxièmes pales d'une deuxième hélice peut être égal à la composante de pas moyen moins la composante de pas différentiel. En outre, la composante de pas moyen peut être égale à la demi-somme des premier et deuxième pas des deux hélices alors que la composante de pas différentiel peut être égale à la demi-différence des premier et deuxième pas des deux hélices.

Dès lors, un giravion hybride inclut au moins une commande de la poussée apte à modifier la valeur de la composante de pas moyen, via une architecture mécanique et/ou électrique par exemple.

Des exemples des giravions hybrides sont décrits dans les documents US 8181901, US 8170728, US 8052094 et US 8113460 par exemple.

Sur un hélicoptère classique muni seulement d'un rotor principal et d'un rotor de contrôle du mouvement en lacet, la vitesse air de l'aéronef est pilotée en modifiant l'assiette en tangage de cet aéronef. Cette assiette en tangage est elle-même pilotée par le biais du pilotage du pas cyclique des pales du rotor principal. Pour maintenir le giravion à la même altitude, le pas collectif des pales du rotor principal est aussi piloté. A titre illustratif, pour augmenter la vitesse air de l'aéronef, le pilote modifie le pas cyclique des pales du rotor principal pour faire piquer le nez de cet aéronef. Afin d'éviter que l'aéronef suive une trajectoire descendante, le pilote augmente en parallèle le pas collectif des pales du rotor principal.

Sur un hélicoptère hybride muni d'hélices portées par une aile, un pilote peut procéder de la même façon. Cependant de manière alternative, le pilote peut augmenter la vitesse air à iso-altitude en pilotant la poussée générée par les hélices et en baissant le pas collectif des pales du rotor principal.

Les commandes à disposition d'un pilote au sein d'un hélicoptère hybride peuvent prendre diverses formes.

L'aéronef peut ainsi comprendre une commande de poussée mobile pilotant une modification du pas des pales des hélices en degré de pas par seconde. Chaque position de la commande de poussée correspond à une modification du pas des pales des hélices en degré de pas par seconde.

Selon une autre possibilité, l'aéronef peut comprendre une commande de poussée mobile générant en permanence un signal de commande porteur d'une consigne de pilotage. Cette consigne de pilotage est convertie en une consigne de pas.

Le document WO 2016/043942 et WO 2016/043943 décrivent un système de commande de pas configuré pour faire varier un angle de pas d'une pluralité de pales d'une hélice d'un giravion. Le système de commande comprend un moteur présentant un arbre de moteur configuré pour tourner autour d'un axe. Un commutateur rotatif comprenant une languette est accouplé à l'arbre de moteur et est configuré pour se déplacer entre une première position et une seconde position. Le système de commande de pas comprend également un capteur de position configuré pour contrôler la position du commutateur rotatif. La position du commutateur rotatif est proportionnelle à l'angle de pas de la pluralité de pales de l'hélice.

Selon un autre exemple, une commande de poussée peut comprendre un bouton présentant au moins trois états discrets à savoir un premier état dit « beep+ » requérant une augmentation de la valeur de la composante de pas moyen, un deuxième état dit « beep- » requérant une baisse de la valeur de la composante de pas moyen et un troisième état requérant de ne pas modifier la valeur de la composante de pas moyen. Le pas des pales des hélices est alors augmenté tant qu'un pilote positionne le bouton dans son premier état.

Alternativement, il est également connu qu'une telle commande de type beep+ et beep- puisse permettre de réaliser une commande en écart de position ou une commande en écart de vitesse temporaire.

Selon une autre réalisation de commande de poussée d'un giravion hybride, une molette mobile selon au moins un degré de liberté par rapport à un portant peut générer un signal de commande fonction de la position courante de l'organe de commande le long de son chemin de déplacement.

Le document EP 3 503 149 A1 décrit un mécanisme de commande (1) électrique muni d'un support (5). Un corps central (10) mobile en rotation autour d'un axe de rotation central (AXROTC) porte un bouton (3) qui est mobile en rotation par rapport au corps central (10) autour d'un axe de rotation déporté (AXROTD) parallèle à l'axe de rotation central (AXROTC).

Un premier moyen de rappel (20) est interposé entre le corps central (10) et le bouton (3), un deuxième moyen de rappel (23) étant interposé entre le corps central (10) et le support (5). Deux interrupteurs primaires (31, 34) électriques sont interposés entre le bouton (3) et le corps central (10) de part et d'autre d'un plan (100) contenant ledit axe de rotation central (AXROTC) et l'axe de rotation déporté (AXROTD). Deux interrupteurs secondaires (41, 44) électriques sont interposés entre le support (5) et le corps central (10) de part et d'autre du plan (10).

En outre, un calculateur peut générer un ordre de commande pour piloter collectivement un pas des pales d'au moins une hélice sous la dépendance de la première consigne de commande et de la seconde consigne de commande. Les documents EP 2 258 616 et US 2018/319482 décrivent quant à eux d'autres systèmes de commande d'un giravion hybride selon l'arrière plan technologique de l'invention.

La présente invention a alors pour objet de proposer un système de commande alternatif permettant de fournir différents niveaux de sensibilité pour la commande de poussée d'une hélice de giravion hybride. L'invention permet alors au pilote de tenir n'importe quel type d'objectif de pilotage avec une consigne très précise.

L'invention concerne donc un système de commande pour commander au moins une hélice d'un giravion hybride, le système de commande générant un ordre de commande pour piloter collectivement un pas des pales de la au moins une hélice, un tel système comportant :
- une première commande de pilotage permettant de générer une première consigne de commande,
- une seconde commande de pilotage permettant au moins de générer une seconde consigne de commande distincte de la première consigne de commande,
- une unité de commande configurée pour générer l'ordre de commande sous la dépendance de la première consigne de commande et de la seconde consigne de commande, l'unité de commande mettant en oeuvre une loi de commande générant l'ordre de commande en fonction de la première consigne de commande et de la seconde consigne de commande.

Selon l'invention, un tel système est remarquable en ce que dans ladite loi de commande la première consigne de commande est représentative d'un premier paramètre de commande et la seconde consigne de commande est représentative d'un second paramètre de commande correspondant à une primitive du premier paramètre de commande.

Autrement dit, l'ordre de commande est alors généré en combinant deux consignes de commande distinctes produites par deux commandes de pilotage distinctes l'une de l'autre. Les première et seconde commandes de pilotage sont en outre actionnables individuellement l'une de l'autre et alternativement l'une par rapport à l'autre.

En effet, de telles première et seconde commandes de pilotage sont aptes à être actionnées l'une après l'autre par un doigt tel le pouce ou l'index d'une même main d'un pilote.

Le pilote peut ainsi actionner la première commande pour générer une première consigne visant à modifier l'ordre de commande avec un premier niveau de précision ou de sensibilité pour se rapprocher d'un objectif de pilotage prédéterminé. Dans un exemple ne faisant pas partie de l'invention présentement revendiquée, une fois proche de l'objectif de pilotage, le pilote actionne alors la seconde commande pour générer une seconde consigne permettant quant à elle de modifier l'ordre de commande avec un second niveau de précision ou de sensibilité pour atteindre l'objectif de pilotage prédéterminé. Le second niveau de précision est alors supérieur au premier niveau et permet au pilote d'atteindre l'objectif de pilotage. La première et la seconde commande sont ainsi connectées par voie filaire ou non filaire à l'unité de commande qui reçoit les première et seconde consignes de commande.

Ces première et seconde consignes de commande sont alors traitées et éventuellement mémorisées par l'unité de commande pour pouvoir ensuite générer l'ordre de commande permettant au giravion hybride de tenir précisément l'objectif de pilotage prédéterminé. Dans cet exemple ne faisant pas partie de l'invention présentement revendiquée, l'ordre de commande peut ainsi être modifié de manière différenciée selon deux incréments distincts comportant un premier incrément fourni par la première consigne de commande et un second incrément fourni par la seconde consigne de commande.

Dans cet exemple, le premier incrément est alors supérieur au second incrément et permet ainsi au pilote de modifier rapidement l'ordre de commande avec un grand incrément.

Dans cet exemple, le second incrément est donc choisi inférieur au premier incrément et permet ainsi d'atteindre avec précision un objectif de pilotage prédéterminé.

L'unité de commande peut comprendre par exemple au moins un processeur et au moins une mémoire, au moins un circuit intégré, au moins un système programmable, au moins un circuit logique, ces exemples ne limitant pas la portée donnée à l'expression « unité de commande ». Le terme processeur peut désigner aussi bien une unité centrale de traitement connue sous l'acronyme CPU, une unité graphique de traitement GPU, une unité digitale connue sous l'acronyme DSP, un microcontrôleur...

Dans un mode de réalisation selon l'invention actuellement revendiquée, lorsque la première commande génère une première consigne représentative d'une accélération du giravion hybride alors la seconde commande génère une seconde consigne représentative d'une vitesse du giravion hybride. De même, lorsque la première commande génère une première consigne représentative d'un à-coup du giravion hybride alors la seconde commande génère une seconde consigne représentative d'une accélération du giravion hybride.

Avantageusement, la première commande de pilotage peut comporter un premier organe mobile présentant au moins un degré de mobilité en rotation par rapport à un premier support autour d'un premier axe de rotation, ledit premier organe mobile étant apte à être déplacé en rotation selon deux sens de rotation opposés autour d'une première position centrale.

Autrement dit, le premier organe mobile est articulé de manière mobile en rotation par rapport à un premier support selon une liaison de type pivot. Le premier organe mobile peut ainsi comporter par exemple une molette présentant une surface texturée, munie de picots, moletée ou encore crantée. Alternativement, le premier organe mobile peut comporter un bouton présentant une excroissance émergeant sensiblement perpendiculairement par rapport au premier axe de rotation.

En pratique, la première commande de pilotage peut être de type monostable, la première commande de pilotage comportant des premiers moyens de rappel élastique configurés pour rappeler le premier organe mobile dans la position centrale.

En outre, la première commande peut permettre de générer en sortie un signal analogique pour faire varier de manière continue la première consigne de commande.

Une fois rapproché d'un objectif de pilotage au moyen de la première consigne de commande, le pilote peut alors éventuellement relâcher le premier organe mobile qui revient alors automatiquement dans sa position centrale. Les premiers moyens de rappel élastique peuvent notamment comporter au moins un ressort sollicité en torsion, en compression et/ou en traction.

Selon un exemple de réalisation de l'invention, la seconde commande de pilotage peut comporter un second organe mobile présentant au moins un degré de mobilité en rotation par rapport à un second support autour d'un second axe de rotation, le second organe mobile étant apte à être déplacé en rotation selon deux sens de rotation opposés autour d'une seconde position centrale.

Ainsi, comme précédemment pour la première commande, le second organe mobile est articulé de manière mobile en rotation par rapport à un second support selon une liaison de type pivot. Le second organe mobile peut ainsi comporter par exemple une molette présentant une surface texturée, munie de picots, moletée ou encore crantée. Alternativement, le second organe mobile peut comporter un bouton ou une face de forme concave présentant une excroissance émergeant radialement par rapport au second axe de rotation.

Un tel bouton peut alors présenter au moins trois états discrets à savoir un premier état dit « beep+ » requérant une augmentation de la seconde consigne de commande, un deuxième état dit « beep- » requérant une baisse de la seconde consigne de commande et un troisième état requérant de ne pas modifier la seconde consigne de commande.

Le premier état beep+ correspond alors à un déplacement du second organe mobile selon un premier sens de rotation.

Le deuxième état beep- correspond quant à lui à un déplacement du second organe mobile selon un second sens de rotation opposé au premier sens de rotation.

En pratique, la seconde commande de pilotage peut être de type monostable, la seconde commande de pilotage comportant des seconds moyens de rappel élastique configurés pour rappeler le second organe mobile dans la seconde position centrale.

Une fois l'objectif de pilotage atteint au moyen de la seconde consigne de commande, le pilote relâche le second organe mobile qui revient alors automatiquement dans sa position centrale. Les seconds moyens de rappel élastique peuvent notamment comporter au moins un ressort sollicité en torsion, en compression et/ou en traction.

Dans un exemple ne faisant pas partie de l'invention présentement revendiquée, une pression sur le second organe mobile selon le degré de mobilité autour du second axe de rotation peut ainsi permettre d'incrémenter ou de décrémenter d'un incrément prédéterminé l'ordre de commande permettant de piloter collectivement le pas des pales de la au moins une hélice.

Avantageusement, le second organe mobile peut présenter un degré de mobilité en translation par rapport au second support selon un axe de translation, l'axe de translation étant orienté perpendiculairement par rapport au second axe de rotation.

Autrement dit, le second organe mobile peut avoir une fonction annexe à la modification de la seconde consigne de commande. Cette fonction annexe peut permettre de réaliser une sélection ou une activation d'un mode de pilotage particulier en effectuant une pression sur le second organe mobile selon son degré de mobilité en translation et suivant l'axe de translation.

Selon une alternative de l'invention compatible avec les précédentes, la première consigne de commande peut être représentative d'un premier paramètre de commande choisi parmi le groupe comportant une vitesse du giravion hybride par rapport au sol, une vitesse du giravion hybride par rapport à l'air, une accélération longitudinale du giravion hybride par rapport au sol, une dérivée première temporelle de l'accélération longitudinale du giravion hybride par rapport au sol, une dérivée seconde temporelle de l'accélération longitudinale du giravion hybride par rapport au sol, une vitesse de variation d'une puissance transmise à la au moins une hélice, une vitesse de variation du pas desdites pales de la au moins une hélice.

En pratique, la première consigne de commande peut ainsi être générée en modifiant d'un premier incrément prédéterminé ou non prédéterminé le premier paramètre de commande. Ainsi, lorsque la première commande de pilotage comporte un premier organe mobile présentant au moins un degré de mobilité en rotation par rapport à un premier support autour d'un premier axe de rotation, un actionnement de la première commande de pilotage selon ce degré de mobilité en rotation par rapport au premier support peut alors générer la première consigne de commande par exemple sous forme d'un signal analogique représentatif du premier paramètre de commande.

En revanche, la seconde commande de pilotage comportant un second organe mobile présentant au moins un degré de mobilité en rotation par rapport à un second support autour d'un second axe de rotation, un actionnement impulsionnel de la seconde commande de pilotage selon le au moins un degré de mobilité en rotation par rapport au second support peut générer la seconde consigne de commande sous forme d'un signal calibré représentatif du second paramètre de commande. Dans un exemple ne faisant pas partie de l'invention présentement revendiquée, la seconde consigne de commande permet alors de modifier avec précision d'un incrément prédéterminé l'ordre de commande.

De manière complémentaire ou alternative, la seconde consigne de commande peut quant à elle être générée en intégrant les variations du premier paramètre de commande sur un intervalle de temps défini par une durée d'actionnement de la seconde commande de pilotage.

Ainsi, une horloge électronique ou un compteur peut permettre de compter la durée d'actionnement de la seconde commande de pilotage. Cette durée d'actionnement peut alors être utilisée pour atteindre plus ou moins rapidement l'objectif de pilotage.

Avantageusement, la première consigne de commande peut être représentative d'un premier paramètre de commande déterminé selon un choix parmi au moins deux paramètres de commande distincts l'un de l'autre, un actionnement de la seconde commande de pilotage peut être configuré pour modifier le choix du premier paramètre de commande.

Un tel actionnement de la seconde commande peut par exemple être réalisé en déplaçant le second organe mobile selon son degré de mobilité en rotation autour du second axe de rotation. Un dispositif d'affichage tel un écran permet alors par exemple d'afficher alternativement les paramètres de commande ou encore de visualiser le choix du paramètre par exemple en changeant sa couleur, en l'encadrant ou en l'affichant en surbrillance.

Selon un autre exemple de réalisation de l'invention compatible avec les précédents, le second organe mobile présentant un degré de mobilité en translation par rapport au second support selon un axe de translation, un déplacement du second organe mobile selon l'axe de translation peut générer une modification du choix du premier paramètre de commande.

Autrement dit, le déplacement en translation de la seconde commande suivant l'axe de translation peut permettre à un pilote de valider ou de sélectionner le choix du premier paramètre de commande préalablement effectué en manoeuvrant le second organe mobile selon son degré de mobilité en rotation autour du second axe de rotation.

En pratique, la première commande de pilotage et la seconde commande de pilotage peuvent être agencées sur une poignée d'un manche de commande de pas collectif, le manche de commande de pas collectif permettant de piloter collectivement un pas des pales d'un rotor de sustentation du giravion hybride.

En d'autres termes, la première commande de pilotage et la seconde commande de pilotage peuvent être actionnées par un ou plusieurs doigts d'une main d'un pilote tenant dans la paume de sa main le manche de commande de pas collectif.

Selon un exemple avantageux, la première commande de pilotage et la seconde commande de pilotage peuvent être disjointes l'une de l'autre.

Autrement dit, la première commande de pilotage et la seconde commande de pilotage peuvent être actionnées individuellement et indépendamment l'une et l'autre. L'actionnement de la première commande de pilotage peut ainsi être opéré par un pilote sans actionner la seconde commande de pilotage et, inversement, l'actionnement de la seconde commande de pilotage peut être réalisé sans actionner la première commande de pilotage.

La première commande de pilotage et la seconde commande de pilotage peuvent par exemple être juxtaposées l'une à côté de l'autre sur la poignée du manche de commande de pas collectif permettant de piloter collectivement le pas des pales du rotor de sustentation du giravion hybride.

En outre, l'invention concerne également un giravion hybride comportant au moins une hélice.

Un tel giravion est alors remarquable en ce qu'il comporte le système de commande précité permettant de générer un ordre de commande et de le transmettre à la ou aux hélices.

La présente invention a aussi pour objet un procédé de commande pour commander au moins une hélice d'un giravion hybride, le procédé de commande comportant une étape de génération d'un ordre de commande pour piloter collectivement un pas des pales de la au moins une hélice, un tel procédé de commande comportant les étapes suivantes :
- génération d'une première consigne de commande,
- génération d'une seconde consigne de commande distincte de la première consigne de commande,
l'étape de génération de l'ordre de commande étant opérée sous la dépendance de la première consigne de commande et de la seconde consigne de commande en mettant en oeuvre une loi de commande générant l'ordre de commande en fonction de la première consigne de commande et la seconde consigne de commande.

Selon l'invention, un tel procédé est remarquable en ce que dans ladite loi de commande la première consigne de commande est représentative d'un premier paramètre de commande et la seconde consigne de commande est représentative d'un second paramètre de commande correspondant à une primitive du premier paramètre de commande.

Ainsi, le procédé de commande permet de faciliter le pilotage d'un giravion hybride en générant un ordre de commande au moyen des deux consignes de commande distinctes produites par deux commandes de pilotage distinctes l'une de l'autre. Les première et seconde consignes de commande sont en outre générées individuellement l'une après l'autre permettant à un pilote d'atteindre rapidement et précisément un objectif de pilotage prédéterminé.

L'invention et ses avantages apparaîtront avec plus de détails dans le cadre de la description qui suit avec des exemples donnés à titre illustratif en référence aux figures annexées qui représentent :
la figure 1, une vue en perspective d'un giravion hybride conforme à l'invention,
la figure 2, une vue de face d'une poignée d'un manche de commande de pas collectif,
la figure 3, une vue en coupe transversale d'une première commande de pilotage,
la figure 4, une vue en coupe transversale d'une seconde commande de pilotage, et
la figure 5, un logigramme illustrant un procédé de commande conforme à l'invention.

Les éléments présents dans plusieurs figures distinctes sont affectés d'une seule et même référence.

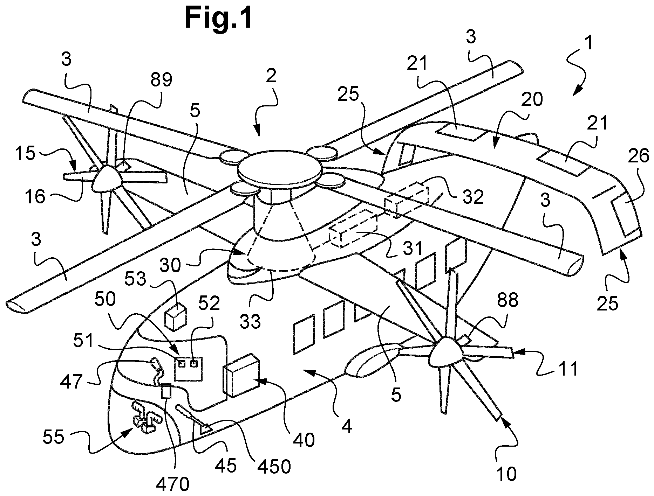

La figure 1 présente un giravion hybride 1 selon l'invention.

Ce giravion hybride 1 comporte un fuselage 4 au dessus duquel est agencé au moins un rotor de sustentation 2. Ce rotor de sustentation 2 est muni de plusieurs pales dénommées « pales principales 3 » par commodité.

De plus, le giravion hybride 1 est pourvu d'au moins une hélice dite « première hélice », de type tractive ou propulsive. Par exemple, le giravion hybride 1 est pourvu d'au moins une première hélice 10 et d'au moins une deuxième hélice 15. Les première et deuxième hélices 10, 15 comportent respectivement plusieurs premières pales 11 et plusieurs deuxièmes pales 16. La première hélice 10 et la deuxième hélice 15 peuvent être disposées latéralement par rapport au fuselage 4, notamment de part et d'autre d'un plan antéropostérieur du giravion hybride 1. Sur la figure 1 les première et deuxième hélices 10, 15 peuvent être inversées. Les première et deuxième hélices 10, 15 sont éventuellement portées par un support 5. Un tel support 5 peut être éventuellement aérodynamique. Par exemple, le support 5 comporte une aile selon l'illustration de la figure 1. Selon la figure 1, les hélices 10, 15 sont disposées au niveau du bord d'attaque d'une aile. Selon un autre exemple, les hélices 10, 15 peuvent être disposées au niveau du bord de fuite de l'aile.

Par ailleurs, le giravion hybride 1 peut comprendre des surfaces de stabilisation voire de manoeuvre. Par exemple, le giravion hybride 1 peut comprendre pour la profondeur au moins un empennage sensiblement horizontal 20 éventuellement avec des gouvernes de profondeur mobiles 21. Par exemple, le giravion hybride 1 peut comprendre pour la direction au moins un empennage sensiblement vertical 25 éventuellement avec des gouvernes de dérives mobiles 26. La figure 1 illustre ainsi un ensemble arrière en forme de U inversé mais cet ensemble arrière peut avoir diverses formes sans sortir du cadre de l'invention. Selon d'autre exemple, l'ensemble arrière peut avoir une forme de H, une forme de U... L'enseignement du brevet FR 3074142 est aussi applicable par exemple.

Par ailleurs, le giravion hybride 1 comporte une installation motrice 30 pour fournir une puissance au rotor de sustentation 2 et éventuellement à chaque hélice 10, 15. Cette installation motrice 30 comporte à cet effet au moins un moteur 31 contrôlé par un calculateur moteur 32 usuel.

Le terme « calculateur » désigne par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur....

En outre, l'installation motrice 30 peut comprendre, par exemple au sein d'un système d'interconnexion, au moins une boîte de transmission de puissance, au moins un arbre, et/ou au moins un organe de connexion entre deux organes en rotation... Par exemple, un ou plusieurs moteurs 31 sont reliés mécaniquement par une ou des chaînes de liaison mécaniques à une boîte de transmission de puissance principale 33 qui entraîne en rotation le rotor de sustentation 2. De plus, la boîte de transmission de puissance principale 33 peut être reliée mécaniquement par au moins un arbre à une boîte de transmission de puissance latérale par hélice 10, 15 qui est donc à son tour reliée à une hélice 10, 15.

Les vitesses de rotation des sorties du ou des moteurs 31, des hélices 10, 15, du rotor de sustentation 2 et du système mécanique d'interconnexion sont éventuellement proportionnelles entre elles, le rapport de proportionnalité étant éventuellement constant quelle que soit la configuration de vol du giravion hybride 1 en conditions normales de fonctionnement, à savoir hors cas de panne ou d'essais ou de formation.

Par ailleurs, le giravion hybride 1 peut comprendre diverses commandes pour être piloté.

En particulier, le giravion hybride 1 peut comprendre un système de pilotage 40 relié à des commandes de vol pour piloter collectivement et cycliquement le pas des pales principales 3. Un tel système de pilotage 40 peut par exemple inclure un ensemble de plateaux cycliques. Ainsi, à chaque instant, le pas des pales principales 3 peut être égal à la somme d'un pas collectif identique pour toutes les pales principales 3 et d'un pas cyclique qui varie en fonction de l'azimut de chaque pale principale 3. Le pas des pales principales 3 est dénommé « pas principal » pour être clairement distingué du pas d'autres pales.

Dès lors, le giravion hybride 1 peut comprendre une commande de pas collectif 45 manoeuvrable par un pilote qui agit sur au moins une chaîne de commande mécanique et/ou électrique du système de pilotage 40 pour faire varier collectivement le pas principal des pales principales 3, via le cas échéant l'ensemble de plateaux cycliques. Par exemple, la commande de pas collectif 45 comporte un levier. En outre, la commande de pas collectif 45 peut comprendre un senseur de pas collectif 450 qui émet un signal analogique, numérique, électrique ou optique qui varie en fonction de la position d'un organe mobile. Par exemple, la commande de pas collectif 45 comporte un levier et un senseur de pas collectif 450 incluant au moins un capteur de position angulaire pour évaluer une position du levier, tel que par exemple un potentiomètre. Le senseur de pas collectif 450 peut aussi être agencé sur un organe mobile conjointement avec la commande de pas collectif par exemple en aval de vérins série et/ou de trim le cas échéant.

De même, le giravion hybride 1 peut comprendre un manche de commande de pas cyclique 47 manoeuvrable par un pilote qui agit sur une ou plusieurs chaînes de commande mécaniques et/ou électriques du système de commande pour faire varier cycliquement le pas des pales principales 3, via le cas échéant l'ensemble de plateaux cycliques. En outre, le manche de commande de pas cyclique 47 peut comprendre un senseur de position 470 qui émet un signal analogique, numérique, électrique ou optique qui varie en fonction de la position d'un organe mobile. Par exemple, le manche de commande de pas cyclique 47 comporte un manche et un senseur de position 470 incluant au moins deux capteurs de position angulaire pour évaluer une position du manche, tels que par exemple des potentiomètres.

De manière usuelle, le giravion hybride 1 peut comprendre un système de commande 50 pour piloter le pas des pales 11,16 de la ou des hélices 10, 15, et notamment des premières pales 11 et des deuxièmes pales 16 selon l'exemple illustré. A chaque instant et notamment en présence de deux hélices 10, 15, le premier pas des premières pales 11 de la première hélice 10 peut être égal à la somme d'une composante de pas moyen et d'une composante de pas différentiel alors que le deuxième pas des deuxièmes pales 16 de la deuxième hélice 15 est égal à la différence entre cette composante de pas moyen et la composante de pas différentiel.

Eventuellement, le giravion hybride 1 comporte un premier senseur 88 de mesure pour mesurer la première valeur du premier pas et un deuxième senseur 89 de mesure pour mesurer la deuxième valeur du deuxième pas. Par exemple, le premier senseur 88 de mesure comporte un capteur de position émettant un signal analogique, numérique, électrique ou optique qui varie en fonction de la position d'un arbre de commande du pas des premières pales 11. De même, le deuxième senseur 89 peut comporter un capteur de position émettant un signal analogique, numérique, électrique ou optique qui varie en fonction de la position d'un arbre de commande du pas des deuxièmes pales 16. Chaque capteur de position peut être d'un type usuel et peut par exemple comprendre un capteur de vitesse permettant d'obtenir une position par intégration, un potentiomètre... De tels senseurs 88 et 89 peuvent notamment permettre d'asservir avec une boucle de régulation un ordre de commande permettant de piloter collectivement un pas des pales 11, 16.

De manière usuelle, une commande de pilotage peut être manoeuvrable par un pilote qui agit sur une ou plusieurs chaînes de commande mécaniques et/ou électriques du système de pilotage 40 pour faire varier le pas de la ou des hélices afin par exemple de piloter une vitesse d'avancement du giravion hybride 1. Par exemple, la commande de pilotage peut soit piloter le pas total de la ou des hélices soit piloter la valeur d'une composante de pas moyen le cas échéant.

De même, le giravion hybride 1 peut comprendre une commande de lacet 55 manoeuvrable par un pilote qui agit sur une ou plusieurs chaînes de commande mécaniques et/ou électriques du système de pilotage 40 pour faire varier le cas échéant la composante de pas différentiel du pas des premières pales 11 et du pas des deuxièmes pales 16. La commande de lacet 55 peut prendre la forme d'un palonnier par exemple.

En outre, le système de pilotage 40 peut comporter un ou plusieurs calculateurs de pilotage en communication au moins avec une commande de pilotage ainsi qu'éventuellement avec le premier senseur 88 de mesure, le deuxième senseur 89 de mesure et/ou le senseur de pas collectif 450 voire avec une ou plusieurs commandes précitées.

En outre, un tel giravion hybride comporte également un système de commande 50 pour commander la ou les hélices 10, 15 en générant un ordre de commande pour piloter collectivement un pas des pales 11, 16.

Ce système de commande 50 peut être distinct ou confondu avec le système de pilotage 40 précité et comporter par exemple un système de commande de vol automatique connu sous l'acronyme « AFCS » et désignant l'expression en langue anglaise « Automatic Flight Control System ».

Un tel système de commande 50 comporte aussi une première commande de pilotage 51 permettant de générer une première consigne de commande, et une seconde commande de pilotage 52 permettant au moins de générer une seconde consigne de commande distincte de la première consigne de commande.

Le système de commande 50 comporte alors une unité de commande 53 configurée pour générer l'ordre de commande sous la dépendance de la première consigne de commande et de la seconde consigne de commande.

L'unité de commande 53 met ainsi en oeuvre une loi de commande générant l'ordre de commande en fonction de la première consigne de commande et de la seconde consigne de commande.

Le terme « unité de commande » désigne par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « unité de commande ». Le terme processeur peut désigner aussi bien une unité centrale de traitement connue sous l'acronyme CPU, une unité graphique de traitement GPU, une unité digitale connue sous l'acronyme DSP, un microcontrôleur....

En outre, la première consigne de commande est avantageusement représentative d'un premier paramètre de commande choisi parmi le groupe comportant une vitesse du giravion hybride 1 par rapport au sol, une vitesse dudit giravion hybride 1 par rapport à l'air, une accélération longitudinale du giravion hybride 1 par rapport au sol, une dérivée première temporelle de l'accélération longitudinale du giravion hybride 1 par rapport au sol, une dérivée seconde temporelle de l'accélération longitudinale du giravion hybride 1 par rapport au sol, une vitesse de variation d'une puissance transmise à la au moins une hélice 10, 15 et une vitesse de variation du pas des pales 11, 16 de la au moins une hélice 10, 15.

Par ailleurs, la première consigne de commande est représentative d'un premier paramètre de commande et la seconde consigne de commande est quant à elle représentative d'un second paramètre de commande correspondant à une primitive du premier paramètre de commande.

Au surplus, la seconde consigne de commande peut être générée en intégrant les variations du premier paramètre de commande sur un intervalle de temps défini par une durée d'actionnement de la seconde commande de pilotage 52.

Avantageusement, la première consigne de commande et la seconde consigne de commande peuvent être générées au moyen de signaux analogiques, numériques, électriques ou optiques qui varient en fonction de la position d'un organe mobile.

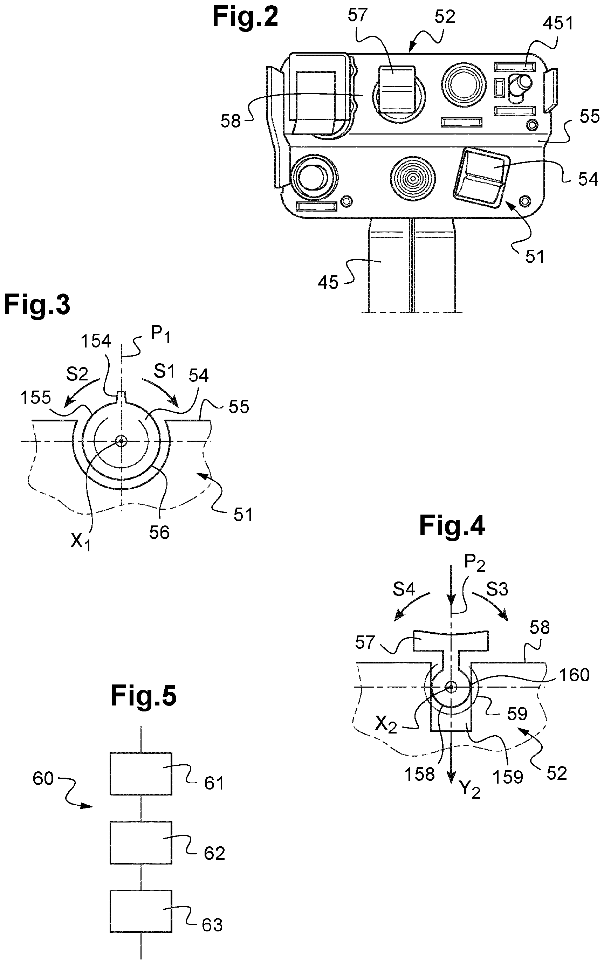

Telle que représentée à la figure 2, la première commande de pilotage 51 et la seconde commande de pilotage 52 peuvent par exemple être juxtaposées l'une à côté de l'autre sur une poignée 451 du manche de commande de pas collectif 45 permettant de piloter collectivement le pas des pales du rotor de sustentation du giravion hybride. Ainsi, la première commande de pilotage 51 et la seconde commande de pilotage 52 sont disjointes l'une de l'autre et peuvent être actionnées par un pilote indépendamment l'une de l'autre.

La première commande de pilotage 51 peut par exemple comporter un premier organe mobile 54 apte à se déplacer par rapport à un premier support 55. Ainsi, le premier organe mobile 54 peut présenter au moins un degré de mobilité en rotation par rapport au premier support 55 autour d'un premier axe de rotation X1.

De même, la seconde commande de pilotage 52 peut comporter un second organe mobile 57 présentant au moins un degré de mobilité en rotation par rapport à un second support 58 autour d'un second axe de rotation X2.

En outre, le premier support 55 et le second support 58 peuvent être formés par un même ensemble comportant une poignée 451 du manche de commande de pas collectif 45 tel que décrit à la figure 1.

En outre, lorsque la première commande de pilotage 51 comporte un premier organe mobile 54 présentant au moins un degré de mobilité en rotation par rapport au premier support 55 autour du premier axe de rotation X1, un actionnement du premier organe mobile 54 selon son degré de mobilité en rotation par rapport au premier support 55 peut alors générer la première consigne de commande par exemple sous forme d'un signal analogique représentatif du premier paramètre de commande.

De même, lorsque la seconde commande de pilotage 52 comporte un second organe de mobile 57 présentant au moins un degré de mobilité en rotation par rapport au second support 58 autour du second axe de rotation X2, un actionnement du second organe mobile 57 peut quant à lui générer la seconde consigne de commande sous forme d'un signal impulsionnel calibré représentatif du second paramètre de commande. Dans un exemple ne faisant pas partie de l'invention présentement revendiquée, la seconde consigne de commande permet alors de modifier avec précision d'un incrément prédéterminé l'ordre de commande.

La première consigne peut alors être déterminée en fonction d'une position courante du premier organe mobile 54 par rapport au premier support 55. La première consigne peut alors varier linéairement ou non linéairement avec une telle position courante du premier organe mobile 54.

En outre, la première consigne peut varier selon différentes lois de variation en fonction d'un paramètre de vol tel que par exemple la vitesse de déplacement du giravion hybride 1 par rapport au sol ou par rapport à l'air.

Alternativement, une telle première commande de pilotage 51 peut être de type monostable. Dans ce cas et telle que représentée à la figure 3, la première commande de pilotage 51 peut comporter des premiers moyens de rappel élastique 56 configurés pour, après avoir été actionné en rotation, rappeler automatiquement le premier organe mobile 54 dans une position centrale P1. Ces premiers moyens de rappel élastique 56 peuvent par exemple comporter un ressort sollicité en torsion.

En outre, le premier organe mobile 54 peut par exemple être déplacé par un doigt d'un pilote selon un mouvement de rotation selon deux sens de rotation S1 et S2 opposés autour d'une première position centrale P1.

Le premier organe mobile 54 peut comporter une excroissance rectiligne 154 qui peut par exemple émerger radialement d'une portion sensiblement cylindrique 155. Une telle excroissance rectiligne 154 permet au doigt du pilote de prendre appui dessus pour transmettre un couple au premier organe mobile 54 mais également servir de repère sensoriel pour identifier la position courante du premier organe mobile 54 par rapport à la première position centrale P1.

Dans ce cas, la première consigne de commande peut être déterminée en fonction d'un écart entre une position courante du premier organe mobile 54 par rapport à la première position centrale P1. Une fois rapproché d'un objectif de pilotage prédéterminé, le premier organe mobile 54 peut alors être relâché par le pilote et peut ainsi revenir dans sa première position centrale P1 sans modifier la première consigne de commande.

La première consigne peut alors varier linéairement ou non linéairement avec un tel écart de position du premier organe mobile 54.

Dans ce cas, la première consigne peut également varier selon différentes lois de variation en fonction d'un paramètre de vol tel que par exemple la vitesse de déplacement du giravion hybride 1 par rapport au sol ou par rapport à l'air.

De même, la seconde commande de pilotage 52 peut être de type monostable. Dans ce cas et telle que représentée à la figure 4, la seconde commande de pilotage 52 peut comporter des seconds moyens de rappel élastique 59 configurés pour rappeler le second organe mobile 57 dans la seconde position centrale P2. Ces seconds moyens de rappel élastique 59 peuvent par exemple comporter un ressort sollicité en torsion.

Ainsi, le second organe mobile 57 est ainsi apte à être déplacé en rotation selon deux sens de rotation S3 et S4 opposés autour d'une seconde position centrale P2.

Le second organe mobile 57 peut comporter un bouton ou une face 157 sensiblement concave. Une telle face 157 émerge radialement d'une portion sensiblement cylindrique 158. Une telle face 157 permet au doigt du pilote de prendre appui dessus pour déplacer le second organe mobile 57 par rapport au second support 58.

Un tel bouton peut alors présenter au moins trois états discrets à savoir un premier état dit beep+ requérant une augmentation de la seconde consigne de commande, un deuxième état dit beep-requérant une baisse de la seconde consigne de commande et un troisième état requérant de ne pas modifier la seconde consigne de commande.

Par ailleurs, le second organe mobile 57 peut également présenter un degré de mobilité en translation par rapport au second support 58 selon un axe de translation Y2 perpendiculaire au second axe de rotation X2. Dans ce cas, la portion sensiblement cylindrique 158 peut alors être libre de se déplacer à l'intérieur d'une gorge 160 de forme sensiblement rectiligne.

Dans ce cas, la seconde commande de pilotage 52 peut comporter d'autres moyens de rappel élastique 159 tel un ressort sollicité en compression. Les moyens de rappel élastique 159 sont ainsi configurés pour automatiquement rappeler le second organe mobile 57 dans une position de repos correspondant avec la seconde position centrale P2.

En outre, dans un mode de pilotage particulier, la première consigne de commande peut être représentative d'un premier paramètre de commande déterminé selon un choix parmi au moins deux paramètres de commande distincts l'un de l'autre, un actionnement de la seconde commande de pilotage 52 peut alors permettre de modifier le choix du premier paramètre de commande.

Le déplacement en translation du second organe mobile 57 selon l'axe de translation Y2 peut alors générer une sélection d'un autre paramètre et donc une modification du choix initial correspondant au premier paramètre de commande.

Telle que représentée à la figure 5, l'invention concerne également un procédé de commande 60 pour commander au moins une hélice 10, 15 du giravion hybride 1.

Un tel procédé de commande 60 comporte dès lors une étape de génération 61 d'une première consigne de commande et une étape de génération 62 d'une seconde consigne de commande distincte de la première consigne de commande.

Le procédé de commande 60 comporte alors ensuite une étape de génération 63 d'un ordre de commande pour piloter collectivement un pas des pales 11, 16 de la ou des hélices 10, 15.

Une telle étape de génération 63 de l'ordre de commande est alors opérée sous la dépendance de la première consigne de commande et de la seconde consigne de commande en mettant en oeuvre une loi de commande générant l'ordre de commande en fonction de la première consigne de commande et la seconde consigne de commande.

Par exemple, la loi de commande mise en oeuvre lors de l'étape de génération 63 de l'ordre de commande permet de combiner entre elles la première consigne de commande et la seconde consigne de commande.

La première consigne de commande peut ainsi être modifiée avec un premier incrément pour permettre un rapprochement rapide d'un objectif de pilotage. Dans un exemple ne faisant pas partie de l'invention présentement revendiquée, la seconde consigne de commande peut quant à elle être modifiée avec un second incrément plus faible par rapport au premier incrément pour permettre d'atteindre avec précision l'objectif de pilotage prédéterminé.

En outre, la loi de commande mise en oeuvre lors de l'étape de génération 63 de l'ordre de commande peut être fonction par exemple de la vitesse d'avancement du giravion hybride 1 par rapport à l'air ou au sol. Plus précisément, le premier incrément et/ou le second incrément sont alors variables linéairement ou non linéairement en fonction de cette vitesse d'avancement du giravion hybride 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Système de commande (50) pour commander au moins une hélice (10, 15) d'un giravion hybride (1), ledit système de commande (50) générant un ordre de commande pour piloter collectivement un pas des pales (11, 16) de ladite au moins une hélice (10 , 15),
ledit système de commande (50) comportant :
• une première commande de pilotage (51) permettant de générer une première consigne de commande,
• une seconde commande de pilotage (52) permettant au moins de générer une seconde consigne de commande distincte de ladite première consigne de commande, et
• une unité de commande (53) configurée pour générer ledit ordre de commande sous la dépendance de ladite première consigne de commande et de ladite seconde consigne de commande, ladite unité de commande (53) mettant en oeuvre une loi de commande générant ledit ordre de commande en fonction de ladite première consigne de commande et de ladite seconde consigne de commande,
**caractérisé en ce que** dans ladite loi de commande ladite première consigne de commande est représentative d'un premier paramètre de commande et ladite seconde consigne de commande est représentative d'un second paramètre de commande correspondant à une primitive dudit premier paramètre de commande.

2. Système de commande selon la revendication 1,
**caractérisé en ce que** ladite première commande de pilotage (51 ) comporte un premier organe mobile (54) présentant au moins un degré de mobilité en rotation par rapport à un premier support (55) autour d'un premier axe de rotation (X1), ledit premier organe mobile (54) étant apte à être déplacé en rotation selon deux sens de rotation (S1 et S2) opposés autour d'une première position centrale (P1).

3. Système de commande selon la revendication 2,
**caractérisé en ce que** ladite première commande de pilotage (51) est de type monostable, ladite première commande de pilotage (51) comportant des premiers moyens de rappel élastique (56) configurés pour rappeler ledit premier organe mobile (54) dans ladite position centrale (P1).

4. Système de commande selon l'une quelconque des revendications 1 à 3,
**caractérisé en ce que** ladite seconde commande de pilotage (52) comporte un second organe mobile (57) présentant au moins un degré de mobilité en rotation par rapport à un second support (58) autour d'un second axe de rotation (X2), ledit second organe mobile (57) étant apte à être déplacé en rotation selon deux sens de rotation (S3 et S4) opposés autour d'une seconde position centrale (P2).

5. Système de commande selon la revendication 4,
**caractérisé en ce que** ladite seconde commande de pilotage (52) est de type monostable, ladite seconde commande de pilotage (52) comportant des seconds moyens de rappel élastique (59) configurés pour rappeler ledit second organe mobile (57) dans ladite seconde position centrale (P2).

6. Système de commande selon l'une quelconque des revendications 4 à 5,
**caractérisé en ce que** ledit second organe mobile (57) présente un degré de mobilité en translation par rapport audit second support (58) selon un axe de translation (Y2), ledit axe de translation (Y2) étant orienté perpendiculairement par rapport audit second axe de rotation (X2).

7. Système de commande selon l'une quelconque des revendications 1 à 6,
**caractérisé en ce que** ladite première consigne de commande est représentative d'un premier paramètre de commande choisi parmi le groupe comportant une vitesse dudit giravion hybride (1) par rapport au sol, une vitesse dudit giravion hybride (1) par rapport à l'air, une accélération longitudinale dudit giravion hybride (1) par rapport au sol, une dérivée première temporelle de ladite accélération longitudinale dudit giravion hybride (1) par rapport au sol, une dérivée seconde temporelle de ladite accélération longitudinale dudit giravion hybride (1) par rapport au sol, une vitesse de variation d'une puissance transmise à ladite au moins une hélice (10, 15) et une vitesse de variation dudit pas desdites pales (11, 16) de ladite au moins une hélice (10, 15).

8. Système de commande selon la revendication 1,
**caractérisé en ce que**, ladite seconde commande de pilotage (52) comportant un second organe mobile (57) présentant au moins un degré de mobilité en rotation par rapport à un second support (58) autour d'un second axe de rotation (X2), un actionnement impulsionnel dudit second organe mobile (57) selon ledit au moins un degré de mobilité en rotation par rapport audit second support (58) génère ladite seconde consigne de commande sous forme d'un signal calibré représentatif du second paramètre de commande.

9. Système de commande selon la revendication 8,
**caractérisé en ce que** ladite seconde consigne de commande est générée en intégrant les variations dudit premier paramètre de commande sur un intervalle de temps défini par une durée d'actionnement de ladite seconde commande de pilotage (52).

10. Système de commande selon l'une quelconque des revendications 1 à 9,
**caractérisé en ce que** ladite première consigne de commande est représentative d'un premier paramètre de commande déterminé selon un choix parmi au moins deux paramètres de commande distincts l'un de l'autre, un actionnement de ladite seconde commande de pilotage (52) est configuré pour modifier ledit choix dudit premier paramètre de commande.

11. Système de commande selon la revendication 10 et l'une quelconque des revendications 8 et 9,
**caractérisé en ce que**, ledit second organe mobile (57) présentant un degré de mobilité en translation par rapport audit second support (58) selon un axe de translation (Y2), un déplacement dudit second organe mobile (57) selon ledit axe de translation (Y2) génère une modification dudit choix dudit premier paramètre de commande.

12. Système de commande selon l'une quelconque des revendications 1 à 11,
**caractérisé en ce que** ladite première commande de pilotage (51) et ladite seconde commande de pilotage (52) sont agencées sur une poignée (451) d'un manche de commande de pas collectif (45), ledit manche de commande de pas collectif (45) permettant de piloter collectivement un pas des pales (3) d'un rotor de sustentation (2) dudit giravion hybride (1).

13. Système de commande selon l'une quelconque des revendications 1 à 12,
**caractérisé en ce que** ladite première commande de pilotage (51 ) et ladite seconde commande de pilotage (52) sont disjointes l'une de l'autre.

14. Giravion hybride (1) comportant au moins une hélice (10, 15), **caractérisé en ce que** ledit giravion hybride (1) comporte un système de commande (50) selon l'une quelconque des revendications 1 à 13.

15. Procédé de commande (60) pour commander au moins une hélice (10, 15) d'un giravion hybride (1), ledit procédé de commande (60) comportant une étape de génération (63) d'un ordre de commande pour piloter collectivement un pas des pales (11, 16) de ladite au moins une hélice (10, 15),
ledit procédé de commande (60) comportant les étapes suivantes :
• génération (61) d'une première consigne de commande,
• génération (62) d'une seconde consigne de commande distincte de ladite première consigne de commande,
ladite étape de génération (63) dudit ordre de commande étant opérée sous la dépendance de ladite première consigne de commande et de ladite seconde consigne de commande en mettant en oeuvre une loi de commande générant ledit ordre de commande en fonction de ladite première consigne de commande et ladite seconde consigne de commande,
**caractérisé en ce que** dans ladite loi de commande ladite première consigne de commande est représentative d'un premier paramètre de commande et ladite seconde consigne de commande est représentative d'un second paramètre de commande correspondant à une primitive dudit premier paramètre de commande.

## Patentansprüche

1. Steuerungssystem (50) zum Steuern mindestens eines Propellers (10, 15) eines Hybrid-Drehflügelflugzeugs (1), wobei das Steuerungssystem (50) einen Steuerbefehl erzeugt, um eine Steigung der Blätter (11, 16) des mindestens einen Propellers (10, 15) kollektiv zu steuern,
wobei das Steuerungssystem (50) umfasst:
- eine erste Steuerung (51), die es ermöglicht, einen ersten Steuerungssollwert zu erzeugen,
- eine zweite Steuerung (52), die es zumindest ermöglicht, einen zweiten Steuerungssollwert zu erzeugen, der sich von dem ersten Steuerungssollwert unterscheidet, und
- eine Steuereinheit (53), die konfiguriert ist, um den Steuerbefehl in Abhängigkeit von dem ersten Steuerungssollwert und dem zweiten Steuerungssollwert zu erzeugen, wobei die Steuereinheit (53) eine Steuerungsregel implementiert, die den Steuerbefehl in Abhängigkeit von dem ersten Steuerungssollwert und dem zweiten Steuerungssollwert erzeugt,
**dadurch gekennzeichnet, dass** in der Steuerungsregel der erste Steuerungssollwert repräsentativ für einen ersten Steuerungsparameter ist und der zweite Steuerungssollwert repräsentativ für einen zweiten Steuerungsparameter ist, der einer Stammfunktion des ersten Steuerungsparameters entspricht.

2. Steuerungssystem nach Anspruch 1,
**dadurch gekennzeichnet, dass** die erste Steuerung (51) ein erstes bewegliches Organ (54) umfasst, das mindestens einen Freiheitsgrad der Drehung in Bezug auf einen ersten Träger (55) um eine erste Drehachse (X1) aufweist, wobei das erste bewegliche Organ (54) in der Lage ist, aus einer ersten zentralen Position (P1) heraus in zwei entgegengesetzten Drehrichtungen (S1 und S2) gedreht zu werden.

3. Steuerungssystem nach Anspruch 2,
**dadurch gekennzeichnet, dass** die erste Steuerung (51) vom monostabilen Typ ist, wobei die erste Steuerung (51) erste elastische Rückstellmittel (56) umfasst, die konfiguriert sind, um das erste bewegliche Organ (54) in die zentrale Position (P1) zurückzustellen.

4. Steuerungssystem nach einem der Ansprüche 1 bis 3,
**dadurch gekennzeichnet, dass** die zweite Steuerung (52) ein zweites bewegliches Organ (57) umfasst, das mindestens einen Freiheitsgrad der Drehung in Bezug auf einen zweiten Träger (58) um eine zweite Drehachse (X2) aufweist, wobei das zweite bewegliche Organ (57) in der Lage ist, aus einer zweiten zentralen Position (P2) heraus in zwei entgegengesetzten Drehrichtungen (S3 und S4) gedreht zu werden.

5. Steuerungssystem nach Anspruch 4,
**dadurch gekennzeichnet, dass** die zweite Steuerung (52) vom monostabilen Typ ist, wobei die zweite Steuerung (52) zweite elastische Rückstellmittel (59) umfasst, die konfiguriert sind, um das zweite bewegliche Organ (57) in die zweite zentrale Position (P2) zurückzustellen.

6. Steuerungssystem nach einem der Ansprüche 4 bis 5,
**dadurch gekennzeichnet, dass** das zweite bewegliche Organ (57) einen Freiheitsgrad der Translation in Bezug auf den zweiten Träger (58) entlang einer Translationsachse (Y2) aufweist, wobei die Translationsachse (Y2) senkrecht zu der zweiten Drehachse (X2) ausgerichtet ist.

7. Steuerungssystem nach einem der Ansprüche 1 bis 6,
**dadurch gekennzeichnet, dass** der erste Steuerungssollwert repräsentativ für einen ersten Steuerparameter ist, der aus der Gruppe ausgewählt ist, die eine Geschwindigkeit des Hybrid-Drehflügelflugzeugs (1) in Bezug auf den Boden, eine Geschwindigkeit des Hybrid-Drehflügelflugzeugs (1) in Bezug auf die Luft, eine Längsbeschleunigung des Hybrid-Drehflügelflugzeugs (1) in Bezug auf den Boden, eine erste zeitliche Ableitung der Längsbeschleunigung des Hybrid-Drehflügelflugzeugs (1) in Bezug auf den Boden, eine zweite zeitliche Ableitung der Längsbeschleunigung des Hybrid-Drehflügelflugzeugs (1) in Bezug auf den Boden, eine Änderungsgeschwindigkeit einer an den mindestens einen Propeller (10, 15) übertragenen Leistung und eine Änderungsgeschwindigkeit der Steigung der Blätter (11, 16) des mindestens einen Propellers (10, 15) umfasst.

8. Steuerungssystem nach Anspruch 1,
**dadurch gekennzeichnet, dass** die zweite Steuersteuerung (52) ein zweites bewegliches Organ (57) umfasst, das mindestens einen Freiheitsgrad der Drehung in Bezug auf einen zweiten Träger (58) um eine zweite Drehachse (X2) aufweist, und eine Impulsbetätigung des zweiten beweglichen Organs (57) gemäß dem mindestens einen Freiheitsgrad der Drehung in Bezug auf den zweiten Träger (58) den zweiten Steuerungssollwert in Form eines für den zweiten Steuerparameter repräsentativen kalibrierten Signals erzeugt.

9. Steuerungssystem nach Anspruch 8,
**dadurch gekennzeichnet, dass** der zweite Steuerungssollwert durch Integrieren der Änderungen des ersten Steuerparameters über ein Zeitintervall erzeugt wird, das durch eine Dauer der Betätigung der zweiten Steuerung (52) definiert ist.

10. Steuerungssystem nach einem der Ansprüche 1 bis 9,
**dadurch gekennzeichnet, dass** der erste Steuerungssollwert repräsentativ für einen ersten Steuerungsparameter ist, der gemäß einer Auswahl aus mindestens zwei voneinander verschiedenen Steuerungsparametern bestimmt ist, wobei eine Betätigung der zweiten Steuerung (52) konfiguriert ist, um die Auswahl des ersten Steuerungsparameters zu ändern.

11. Steuerungssystem nach Anspruch 11 und einem der Ansprüche 8 oder 9,
**dadurch gekennzeichnet, dass** das zweite bewegliche Organ (57) einen Freiheitsgrad der Translation in Bezug auf den zweiten Träger (58) entlang einer Translationsachse (Y2) aufweist, wobei eine Bewegung des zweiten beweglichen Organs (57) entlang der Translationsachse (Y2) eine Änderung der Auswahl des ersten Steuerparameters bewirkt.

12. Steuerungssystem nach einem der Ansprüche 1 bis 11,
**dadurch gekennzeichnet, dass** die erste Steuerung (51) und die zweite Steuerung (52) an einem Griff (451) eines Kollektivsteigungssteuerknüppels (45) angeordnet sind, wobei der Kollektivsteigungssteuerknüppel (45) es ermöglicht, eine Steigung der Blätter (3) eines Auftriebsrotors (2) des Hybrid-Drehflügelflugzeugs (1) kollektiv zu steuern.

13. Steuerungssystem nach einem der Ansprüche 1 bis 12,
**dadurch gekennzeichnet, dass** die erste Steuerung (51) und die zweite Steuerung (52) voneinander disjunkt sind.

14. Hybrid-Drehflügelflugzeug (1) mit mindestens einem Propeller (10, 15),
**dadurch gekennzeichnet, dass** das Hybrid-Drehflügelflugzeug (1) ein Steuerungssystem (50) nach einem der Ansprüche 1 bis 13 aufweist.

15. Steuerverfahren (60) zum Steuern mindestens eines Propellers (10, 15) eines Hybrid-Drehflügelflugzeugs (1), wobei das Steuerverfahren (60) einen Schritt des Erzeugens (63) eines Steuerbefehls zum kollektiven Steuern einer Steigung der Blätter (11, 16) des mindestens einen Propellers (10, 15) umfasst,
wobei das Steuerungsverfahren (60) die folgenden Schritte umfasst:
- Erzeugen (61) eines ersten Steuerungssollwerts,
- Erzeugen (62) eines zweiten Steuerungssollwerts, der sich von dem ersten Steuerungssollwert unterscheidet, wobei der Schritt des Erzeugens (63) des Steuerungsbefehls in Abhängigkeit von dem ersten Steuerungssollwert und dem zweiten Steuerungssollwert durchgeführt wird, indem eine Steuerungsregel implementiert wird, die den Steuerbefehl in Abhängigkeit von dem ersten Steuerungssollwert und dem zweiten Steuerungssollwert erzeugt,
**dadurch gekennzeichnet, dass** in der Steuerungsregel der erste Steuerungssollwert repräsentativ für einen ersten Steuerungsparameter ist und der zweite Steuerungssollwert repräsentativ für einen zweiten Steuerungsparameter ist, der einer Stammfunktion des ersten Steuerungsparameters entspricht.

## Claims

1. Control system (50) for controlling at least one propeller (10, 15) of a compound rotorcraft (1), said control system (50) generating a control order for controlling, collectively, a pitch of the blades (11, 16) of said at least one propeller (10, 15),
said control system (50) comprising:
• a first piloting control (51) making it possible for a first control setpoint to be generated;
• a second piloting control (52) making it possible for at least one second control setpoint different from said first control setpoint to be generated, and
• a control unit (53) configured to generate said control order depending on said first control setpoint and said second control setpoint, said control unit (53) implementing a control law generating said control order as a function of said first control setpoint and said second control setpoint,
**characterised in that**, in said control law,
said first control setpoint is representative of a first control parameter and said second control setpoint is representative of a second control parameter corresponding to a primitive of said first control parameter.

2. Control system according to claim 1,
**characterised in that** said first piloting control (51) comprises a first movable member (54) having at least one degree of rotational mobility relative to a first support (55) about a first rotation axis (X1), said first movable member (54) being capable of being rotated in two opposing directions of rotation (S1 and S2) about a first central position (P1).

3. Control system according to claim 2,
**characterised in that** said first piloting control (51) is monostable, said first piloting control (51) comprising first elastic return means (56) configured to return said first movable member (54) to said central position (P1).

4. Control system according to any one of claims 1 to 3,
**characterised in that** said second piloting control (52) comprises a second movable member (57) having at least one degree of rotational mobility relative to a second support (58) about a second rotation axis (X2), said second movable member (57) being capable of being rotated in two opposing directions of rotation (S3 and S4) about a second central position (P2).

5. Control system according to claim 4,
**characterised in that** said second piloting control (52) is monostable, said second piloting control (52) comprising second elastic return means (59) configured to return said second movable member (57) to said second central position (P2).

6. Control system according to any one of claims 4 to 5,
**characterised in that** said second movable member (57) has a degree of translational mobility relative to said second support (58) along a translation axis (Y2), said translation axis (Y2) being oriented perpendicular to said second rotation axis (X2).

7. Control system according to any one of claims 1 to 6,
**characterised in that** said first control setpoint is representative of a first control parameter chosen from the group comprising a ground speed of said compound rotorcraft (1), an air speed of said compound rotorcraft (1), a longitudinal acceleration of said compound rotorcraft (1) relative to the ground, a first time derivative of said longitudinal acceleration of said compound rotorcraft (1) relative to the ground, a second time derivative of said longitudinal acceleration of said compound rotorcraft (1) relative to the ground, a speed of variation of a power transmitted to said at least one propeller (10, 15) and a speed of variation of said pitch of said blades (11, 16) of said at least one propeller (10, 15).

8. Control system according to claim 1,
**characterised in that** said second piloting control (52) comprising a second movable member (57) having at least one degree of rotational mobility relative to a second support (58) about a second rotation axis (X2), pulsed actuation of said second movable member (57) according to said at least one degree of rotational mobility relative to said second support (58) generates said second control setpoint in the form of a calibrated signal representative of the second control parameter.

9. Control system according to claim 8,
**characterised in that** said second control setpoint is generated by integrating the variations of said first control parameter over a time interval defined by a duration of actuation of said second piloting control (52).

10. Control system according to any one of claims 1 to 9,
**characterised in that** said first control setpoint is representative of a first control parameter determined according to a choice from at least two different control parameters, an actuation of said second piloting control (52) is configured to modify said choice of said first control parameter.

11. Control system according to claim 10 and any one of claims 8 and 9,
**characterised in that** said second movable member (57) having a degree of translational mobility relative to said second support (58) along a translation axis (Y2), moving said second movable member (57) along said translation axis (Y2), generates a modification of said choice of said first control parameter.

12. Control system according to any one of claims 1 to 11,
**characterised in that** said first piloting control (51) and said second piloting control (52) are arranged on a handle (451) of a collective pitch control stick (45), said collective pitch control stick (45) making it possible to control, collectively, a pitch of the blades (3) of a lift rotor (2) of said compound rotorcraft (1).

13. Control system according to any one of claims 1 to 12,
**characterised in that** said first piloting control (51) and said second piloting control (52) are separate from each other.

14. Compound rotorcraft (1) comprising at least one propeller (10, 15), **characterised in that** said compound rotorcraft (1) comprises a control system (50) according to any one of claims 1 to 13.

15. Control method (60) for controlling at least one propeller (10, 15) of a compound rotorcraft (1), said control method (60) comprising a step of generating (63) a control order for controlling, collectively, a pitch of the blades (11, 16) of said at least one propeller (10, 15),
said control method (60) comprising the following steps:
• generating (61) a first control setpoint,
• generating (62) a second control setpoint different from said first control setpoint,
said step of generating (63) said control order being carried out depending on said first control setpoint and said second control setpoint by implementing a control law generating said control order as a function of said first control setpoint and said second control setpoint,
**characterised in that**, in said control law, said first control setpoint is representative of a first control parameter and said second control setpoint is representative of a second control parameter corresponding to a primitive of said first control parameter.
